# EUROPÄISCHE PATENTSCHRIFT

(11) **EP 0 429 031 B1**
(45) Veröffentlichungstag und Bekanntmachung des Hinweises auf die Patenterteilung: **26.04.1995**
(21) Anmeldenummer: 90122022.8
(22) Anmeldetag: 17.11.1990
(51) Int. Cl.: B09B 3/00, C22B 1/00, B08B 3/04

(54) **Vorrichtung zum Trennen insbesondere ölverschmutzter Abfallteile aus Stahl oder Blech und Papier**
Device for separating, in particular, oil contaminated waste comprising steel or sheet metal and paper
Dispositif pour séparer, en particulier, des déchets contaminés par de l'huile, comprenant de l'acier ou du métal en feuille et du papier

(30) Priorität: 21.11.1989 DE 3938544
(43) Veröffentlichungstag der Anmeldung: 29.05.1991
(73) Patentinhaber: Factron Technik GmbH, D-97239 Aub (DE)
(72) Erfinder: Hohe, Paul, W-6981 Collenberg (DE); Speck, Wolfgang, W-8751 Stockstadt (DE); Bemm, Wulf, W-6985 Stadtprozelten (DE)
(74) Vertreter: Zinngrebe, Horst, Dr.rer.nat.

(56) Entgegenhaltungen:
- EP-A- 0 279 469
- DD-A- 249 370
- DE-A- 3 621 836
- DE-A- 3 738 006
- FR-A- 2 557 830
- GB-A- 2 078 138

## Beschreibung

Die Erfindung betrifft eine Vorrichtung zum Trennen von insbesondere durch Öl verschmutzten, zerkleinerten Abfallteilen gemäß dem Oberbegriff des Anspruches 1.

In EP-A-279 469 ist eine Anlage zur Entsorgung, Beseitigung und Aufarbeitung benutzter Ölfilter beschrieben. Die vornehmlich aus Ottomotoren stammenden, nicht mehr verwendbaren Ölfilter werden zerschnitten, und das geschredderte Konglomerat aus Stahl und Blechteilen sowie ölverschmutztem Filterpapier wird anschließend einer Trennanlage zum Ablösen des Filterpapiers von den Metallteilen zugeführt. Diese Trennanlage weist im wesentlichen walzenförmige Bürsten auf, welche das Filterpapier von den Metallteilen abstreifen sollen. Hierbei läßt sich nicht vermeiden, daß die Bürsten sich mit Ölresten zusetzen und dadurch die sie kontaktierenden Metallteile zusätzlich kontaminieren. Ferner erweist es sich als schwierig, die Bürsten von anhängendem Filterpapier zu befreien.

In DE-A-37 38 006 wird ein Verfahren zur Reinigung von verschmutzten Teilen, insbesondere Ölfiltern beschrieben, bei welchem die verschmutzten Teile in eine erwärmte, schmutzlösende Reinigungsflüssigkeit eingebracht werden. Dieses Verfahren ist einerseits vom Energieaufwand her ungünstig und erfordert andererseits den Einsatz besonderer Reinigungsmittel, welche in dem von Metallteilen getrennten Filterpapier hängen bleiben und ein Problem bei der anschließenden Entsorgung des ölverschmutzten Papiers darstellen können.

Aus GB-A-2 078 138 ist eine Vorrichtung nach dem Oberbegriff des Anspruchs 1 bekannt, mit der verbrauchte Akkumulatoren aufgearbeitet werden können. Das Filtrat wie auch der Bodensatz eines Abscheiders dieser Vorrichtung werden gesonderten Waschbecken zugeführt und entsprechend den Eigenschaften der Inhaltsstoffe der verbrauchten Akkumulatoren weiterverarbeitet.

Der Erfindung liegt daher die Aufgabe zugrunde, mit minimalem Energieaufwand und möglichst ohne chemische Zusätze eine Trennung ölverschmutzter Abfallteile in Metallteile einerseits und Papier andererseits zu schaffen.

Dazu wird das eingangs genannte Verfahren in der Weise geführt, daß die Abfallteile in einen Wasserbehälter eingetragen werden, in welchem das Wasser in ständiger Bewegung gehalten, zweckmäßig verwirbelt wird, und daß ein in dem Wasser aufschwimmendes Gut sowie die dem Wasserbehälter entnommenen Blechteile den separaten Behältern zugeführt werden. Es Hat sich überraschenderweise gezeigt, daß das in Bewegung befindliche Wasser ausreicht, das an den Metallteilen anhaftende Filterpapier weitestgehend von diesen abzulösen, welches dann aus dem Wasser zusammen mit den an ihm anhaftenden Ölrückständen entnommen werden kann. Für das erfindungsgemäße Verfahren sind daher keine chemischen Zusätze und, soweit Kaltwasser eingesetzt werden kann, nur soviel Energie nötig als zur Aufrechterhaltung der Wasserbewegung und zum Materialtransport erforderlich ist. Das in einem separaten Behälter aufgefangene Gut kann problemlos, beispielsweise durch Verbrennen, entsorgt werden. Die in einem anderen separaten Behälter aufgesammelten Metallteile dagegen stellen wertvolles Altmetall dar, welches weiterverarbeitet werden kann. Die freiwerdenden Öle können zum Zweitraffinat verarbeitet werden.

Zweckmäßig werden die Abfallteile in dem Wasser umgewälzt, vorzugsweise geschlagen, was die Ablösung von anhaftenden Papierteilen beschleunigt. Die dem Wasser entnommenen Blechteile oder dergleichen können anschließend mittels Druckwasser oder Heißdampf behandelt werden, um die Qualität des dann von Papierresten im wesentlichen befreiten Altmetalls zu erhöhen.

Es empfiehlt sich ferner, das Gut vor dem Zuführen in den separaten Behälter zur Reduzierung seines Wassergehaltes zu verdichten.

Eine Vorrichtung zur Durchführung des erfindungsgemäßen Verfahrens weist einen Wasserbehälter auf, in dessen unterem Teil eine Umwälzvorrichtung angeordnet ist.

Zweckmäßig weist die Umwälzvorrichtung eine angetriebene Welle auf, von welcher Mitnehmer radial abstehen. Die Mitnehmer können an der Welle umfangmäßig versetzt und axial beabstandet befestigt sein. Mit besonderem Vorteil ist die Umwälzvorrichtung am Boden eines Einlauftrichters innerhalb eines im wesentlichen zylindrischen, nach oben offen Mantels angeordnet. Zweckmäßig ist längs der Welle ein Kamm angeordnet, zwischen dessen Zinken die Mitnehmer durchlaufen. Es empfiehlt sich weiterhin, unterhalb der Umwälzvorrichtung einen Entnahmestutzen für die Blechteile oder dergleichen vorzusehen, unterhalb welchem eine beispielsweise einen Kratzförderer aufweisende Entnahnevorrichtung angeordnet ist. Bevorzugt weist die Entnahmevorrichtung eine Waschstation auf, in welchen Druckwasser oder Heißdampf auf die mitgeführten Blechteile oder dergleichen einwirkt. Schließlich erweist es sich als besonders vorteilhaft, wenn an die Entnahmevorrichtung eine Trennstation angeschlossen ist, in welcher Metallteile aus dem entnommenen Gut abgetrennt werden. Diese Trennstation kann eine angetriebene, magnetische Trommel und/oder ein magnetisches Förderband mit Abstreifvorrichtung aufweisen.

In einer Alternative kann die Waschstation auch in der Trennstation angeordnet sein, in welcher Druckwasser oder Heißdampf auf beispielsweise in einer Trommel bewegte Metallteile oder dergleichen zur Ablösung von Papierresten einwirkt. Vorzugsweise ist an der Außenperipherie der Trommel an ihrem bei Drehung nach oben bewegten Teil ein Magnet angeordnet, welcher die im Inneren der Trommel enthaltenen Metallteile auf ein höher angeordnetes Förderband hebt, so daß ölige Papierreste im Wasserbad innerhalb der Trommel zurückbleiben.

Zur Abführung des in der Umwälzvorrichtung von den Blechteilen freigesetzten Papiers kann im oberen Teil des Wasserbehälters zweckmäßig eine in das Wasser eintauchende Abkämmvorrichtung angeordnet sein. Diese weist zweckmäßig einen umlaufenden Rechen auf, welcher vorzugsweise aus mehreren, beiderseits in je einer Endloskette befestigten Rechenelementen besteht. Es empfiehlt sich, an die Abkämmvorrichtung eine Förderschnecke anzuschließen, welche das Filtrat in Form von Papier oder dergleichen einem separaten Behälter zuführt. Die Förderschnecke kann zweckmäßig in einen porösen Konus zur Verdichtung und zur Entwässerung des Filtrats arbeiten.

Schließlich empfiehlt es sich, die Mitnehmer der Welle mit Schwellern zusammen wirken zu lassen, die axial auf einem die Welle umgebenen Zylinder angeordnet sind. Ferner kann der Entnamestutzen gegenüber demjenigen Abschnitt der Welle angeordnet sein, in welchem die Metallteile auf die Welle gelangen.

Das Gut kann zweckmäßig nachverdichtet werden, um den Ölanteil zu minimieren. Für die Entnahme der Metallteile empfiehlt sich der Einsatz eines Kratzförderers innerhalb eines wasserdichten und mit dem Wasser im Behälter kommunizierenden Förderkanals, in welchem die Metallteile vom unteren Teil der Vorrichtung über die Höhe des Wasserspiegels hinaus gefördert werden können. Mit Vorteil wird oberhalb des Wasserspiegels eine Waschstation vorgesehen, in welcher die Metallteile mit Druckwasser oder Heißdampf von anhaftenden Ölresten befreit werden können. Eine nachgeschaltete Rüttelrinne oder dergleichen kann sich dafür empfehlen, die getrennten Bestandteile von anhängendem Wasser zu befreien, wobei anschließend die Metallteile zweckmäßig magnetisch aus dem vom Kratzförderer ausgegebenen Materialstrom herausgezogen und in einen Altmetallbehälter transportiert werden können. Der Verbrauch an Frischwasser ist außerordentlich gering, wenn in Weiterbildung der Erfindung ein Wasserkreislauf vorgesehen ist, der für aus dem untersten Teil der Vorrichtung abgezogenes Wasser ein Filter und eine Wasserpumpe vorsieht, welche weitestgehend von Fremdstoffen im wesentlichen gereinigte Wasser der Vorrichtung, zweckmäßig den Sprühdüsen in der Waschstation, wieder zuführt.

Ausführungsbeispiele der Erfindung werden anhand der beigefügten Zeichnung nachstehend im einzelnen beschrieben. Es zeigen:
- Fig. 1:: Eine schematische Darstellung einer Stirnansicht einer Vorrichtung zur Trennung von Abfallteilen;

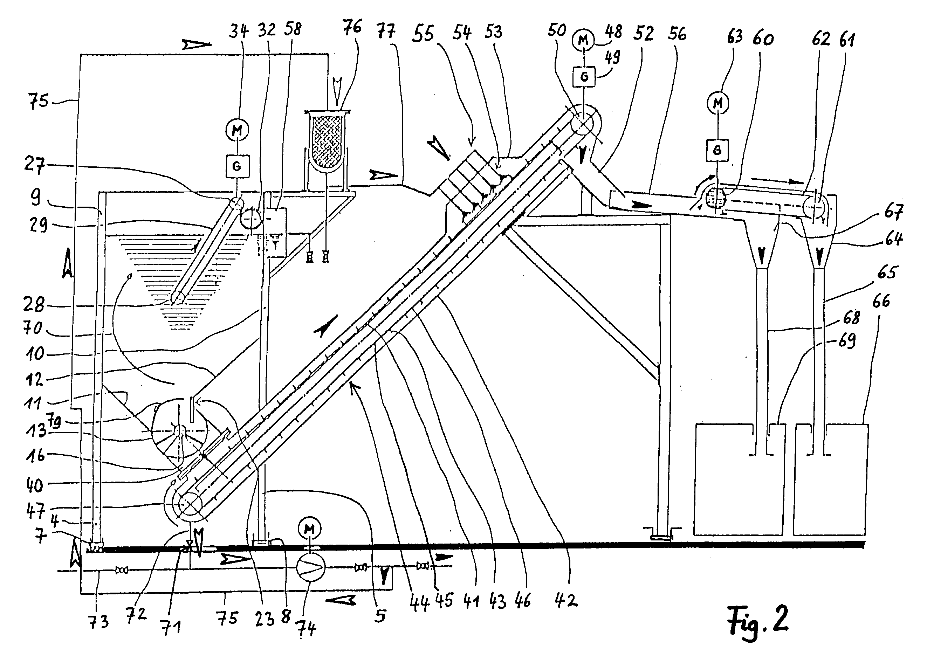

- Fig. 2:: Eine schematische Darstellung eines Schnitts durch die Vorrichtung nach Figur 1 längs der Linie A-A.
- Fig. 3:: Eine der Fig. 2 ähnliche Darstellung einer anderen Ausführungsform der Erfindung;
- Fig. 4:: Eine schematische Darstellung eines Schnittes längs der Linie B-B aus Fig. 3.

Die Vorrichtung weist einen im wesentlichen rechtwinkligen und oben offenen Wasserbehälter 1 auf, der aus einer Stahlkonstruktion mit öldicht verschweißter Blechauskleidung aufgebaut ist. In den Wasserbehälter 1 mündet von oben eine Rutsche 2, längs der geschredderte Abfallteile in den Wasserbehälter 1 einfallen können. Die Abfallteile können beispielsweise zerschnittene Ölfilter sein, die von Ottomotoren, beispielsweise Kfz-Motoren stammen. Die Abfallteile enthalten Blech und Stahlteile sowie separat oder an diesen anhängende Filterpapierstücke, welche mit anhängendem Öl behaftet oder getränkt sind.

Der Wasserbehälter 1 steht auf Pfosten 3, 4, 5, welche auf in der Höhe verstellbaren Füssen 6, 7, 8 ruhen.

Im unteren Teil ist der Wasserbehälter 1 mit zwei von gegenüberliegenden Seitenwänden 9, 10 des Behälters zur Mitte nach unten abgeschrägte Einweisbleche 11, 12 versehen, welche zwischen sich eine Öffung im Mantel einer Langgestreckten Zylinderwand 13 frei lassen. In den zwischen den Seitenwänden 9, 10 befindlichen, gegenüberliegenden Seitenwänden 14, 15 ist eine Zentralwelle 16 drehbar gelagert, welche sich längs der Mitte der Zylinderwand 13 erstreckt. Ein schematisch angedeuteter Motor 17 kann die Zentralwelle 16 über einen Kettentrieb o.ä. 18 in Umdrehung versetzen, wofür ein Ende der Zentralwelle 16 wasser- und öldicht aus der Seitenwand 15 herausgeführt und dort mit einem aufgekeilten Ritzel 19 versehen ist. Auf der Zentralwelle 16 sitzt eine relativ große Anzahl von radial von ihr abstehenden Mitnehmern, von denen zwei bezüglich der Zentralwelle 16 einander gegenüberliegende Mitnehmer mit 20 und 21 bezeichnet sind. Die Mitnehmer können aus Flach- oder Rundstahl bestehen und sind längs der Achse der Zentralwelle voneinander gleich beabstandet. Die Mitnehmer können vorzugsweise auf der Zentralwelle 16 befestigt sein, um eine gleichmäßige Kraftverteilung zu erzielen. Durch die Aufwirbelung des Materials durch die Mitnehmer 20, 21 wird dieses gleichmäßig über die Länge des Zylinders 13 verteilt und fließt somit zur Austragsöffnung 22.

Am Übergang der Zylinderwand 13 zum Einweisblech 12 ist längs der Zentralwelle 16 ein im ganzen mit 23 bezeichneter Kamm befestigt, welcher aus einer Grundplatte 31 mit von dieser abstehenden Stahlzinken besteht. Die Zinken, von denen eine mit 24 bezeichnet ist, sind längs der Grundplatte 31 derart angeordnet, daß bei Drehung der Zentralwelle 16 jeweils ein Mitnehmer zwischen zwei benachbarte Zinken durchlaufen kann.

Am oberen Rand 25 des Wasserbehälters 1 ist eine im ganzen mit 26 bezeichnete Abkämmvorrichtung befestigt, welche zwei parallel um jeweils ein Ritzelpaar 27, 28 umlaufende Ketten 29 aufweist. Zwischen je zwei gegenüberliegenden Kettengliedern jeder Kette ist jeweils ein Rechenelement befestigt, welches aus einem den Abstand der Ketten überbrückenden stabförmigen Kammrücken und an letzterem befestigten, beabstandeten Kammzinken besteht. Wenigstens eines der Ritzelpaare 27, 28 ist in nicht dargestellter Weise angetrieben. Die Abkämmvorrichtung 26 ist so am Wasserbehälter 1 befestigt, daß das untere Ritzelpaar 28 bis etwa zu einem Zirkulationszentrum des im Wasserbehälter 1 enthaltenden Wassers reicht. , Das obere Ritzelpaar 27 ist oberhalb des Wasserspiegels derart angeordnet, daß die Ketten zwischen den beiden Ritzelpaaren 27, 28 sich unter einem Steigungswinkel von etwa 60 Grad erstrecken. Neben und unterhalb dem oberen Ritzelpaar 27 befindet sich die Zugabeöffnung eines eine Förderschnecke 30 umschließenden Zylinders 32, so daß von den Rechenelementen aus dem Wasser entnommenes und nach oben gefördertes Gut, beispielsweise ölgetränkte oder -verschmutzte Papierstücke, in die Zugabeöffnung fallen können, wobei ein nicht dargestellter Abstreifer das an den Kammzinken anhaftende Gut abstreift. Die Förderschnecke 30 ist an einem Ende mit einem weiteren Antrieb 33 gekoppelt, welcher von einem weiteren Motor 34 über ein Getriebe in einer solchen Drehrichtung angetrieben werden kann, daß die Förderschnecke 30 einfallende Papierstücke durch den Zylinder 32 zu einer Ausgabeöffnung 35 an dem dem Kettentrieb 33 gegenüberliegenden Ende der Förderschnecke transportieren kann. Zwischen der Ausgabeöffnung 35 und dem benachbarten Ende der Förderschnecke 30 befindet sich ein sich konusförmig verengender Stutzen 36, in welchem das von der Förderschnecke 30 herangeführte Papier aufgrund seiner konischen Verjüngung verdichtet werden kann. Zweckmäßig ist der Mantel des Stutzens gelöchert, so daß mitgeführtes Wasser und Öl während des Verdichtens abgeschieden wird. Die Ausgabeöffnung 35 steht über ein Fallrohr 37 mit dem Inneren eines separaten Papierverdichters 38 in Verbindung, in welchem das Filtrat komprimiert wird.

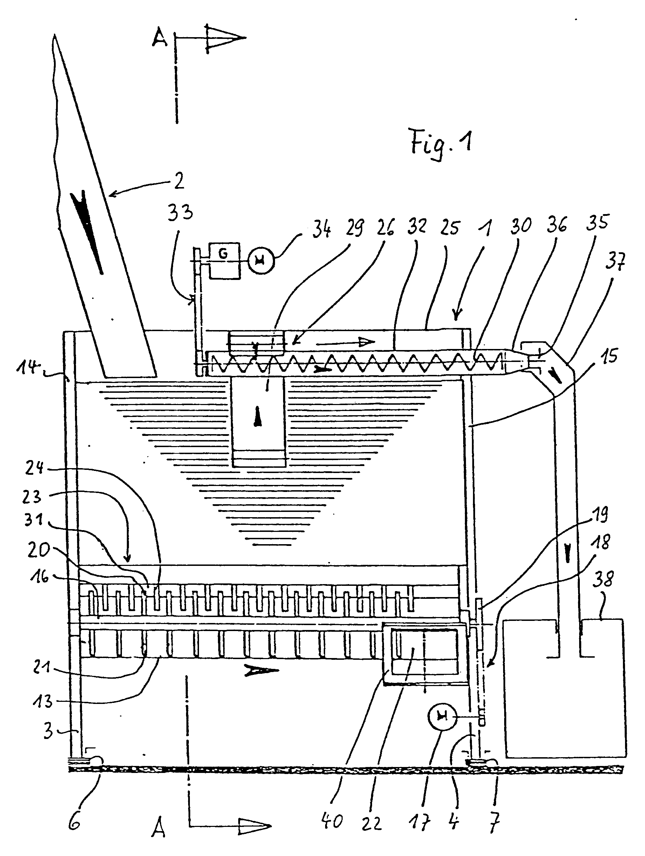

Die Austragöffnung 22 wird von einem Entnahmestutzen 40 gebildet, der um einen Ausschnitt in der Zylinderwand 13 an letztere angeschweißt ist und sich gegenüber der Zylinderwand 13 in einen Förderkanal 42 öffnet. Der Entnahmestutzen 40 kann beispielsweise, wie in Figur 1 dargestellt ist, an der Seitenwand 15 unterhalb der Zylinderwand 13 vorgesehen sein. Der bis auf einen Wasserzulauf und einen Wasserablauf sowie einen Abgabekanal im übrigen wasserdichte Förderkanal 42 umschließt einen Kratzförderer 44 und erstreckt sich unterhalb des Wasserbehälters 1 zwischen dessen Füssen hindurch schräg nach oben und ist an den Beinen durch Flansche oder dergleichen befestigt. Der Kratzförderer 44 besteht aus einer auf einer Blechbühne 41 umlaufenden Förderkette 46 mit aufgesetzten, in Längsrichtung der Förderkette beabstandeten Stollen 43, 45, welche auf der oberen Seite der Bühne 41 entlanggleiten. In dem Förderkanal 42 ist unterhalb des Entnahmestutzens 40 eine erste Unlenkwalze 47 für die Förderkette 46 befestigt, und am oberen Ende des Förderkanals 42 ist eine von einem Motor 48, gegebenenfalls über ein Getriebe 49 angetriebene weitere Umlenkwalze 50 für die Förderkette 46 befestigt. Unterhalb der oberen Umlenkwalze 50 ist der Förderkanal 42 mit einem Abwurfkanal 52 verbunden. Der Förderkanal 42 weist in der Nähe seines oberen Endes eine Erweiterung 53 auf, in welcher mehrere in Förderrichtung beabstandete Sprühdüsen 54 für Kalt- oder Heißwasser befestigt sind. Diese Sprühdüsen bilden eine im ganzen mit 55 bezeichnete Waschstation. Die Sprühdüsen 54 sind auf die Bühne 41 gerichtet und dienen dazu, nach oben geförderte und aus dem Wasserbehälter 1 entnommene Metallteile mit Druckwasser oder Heißdampf zu waschen.

Der Abwurfkanal 52 mündet in eine nach unten geneigte Schwingrinne 56, welche durch nicht dargestellte Mittel in Vibrationen versetzt werden kann. An den die Schwingrinne passierenden Stahl- und Blechteilen anhaftendes Wasser kann dadurch von diesen abtropfen, und auf nicht dargestellte Weise in den Wasserbehälter 1 zurückgeführt werden.

An ihrem dem Abwurfkanal 52 gegenüberliegenden Ende führt die Schwingrinne 56 vor den Mantel einer Magnettrommel 60, die gleichzeitig Umlenkwalze eines Förderbandes 62 ist. Die Magnettrommel 60 nimmt die Metallteile auf und legt sie auf dem Förderband 62 ab.

Das Förderband 62 erstreckt sich bis über die Abwurföffnung 64 eines Fallschachtes 65 für Metallteile, über welcher die zweite Umlenkwalze des Förderbandes 62 angeordnet ist. Die Magnettrommel 60 kann durch einen Motor 63 wie dargestellt angetrieben werden. Der Fallschacht 65 mündet in das Innere eines Schrottbehälters 66.

Von der Magnettrommel nicht aufgenommenes und auf das Förderband 62 nicht übertragenes Gut läuft in der Schwingrinne 56 unterhalb der Magnettrommel weiter bis in den Einlaufrichter 67 eines Fallschachtes 68, der seinerseits in einen Behälter 69 für kontaminiertes Altpapier mündet.

Der Wasserkreislauf in der vorstehend beschriebenen Vorrichtung ist durch Hohl-Pfeile angedeutet und umfasst folgende Leitungen: Am unteren Ende des Förderkanals 42 ist eine Wasserabzugsleitung 72 vorgesehen, in die über ein Ventil 71 eine Frischwasser - Zulaufleitung 73 mündet. Die Wasserabzugsleitung 72 führt, gegebenenfalls über einen nicht dargestellten Schmutzfilter, in den Einlaß einer Umwälzpumpe 74, deren Auslaßleitung 75 in einen Filter 76 einmündet. Der Filter 76, der vor oder nach der Umwälzpumpe 74 vorgesehen sein kann, ist ein feinmaschiger Wasserfilter, der im Wasserbehälter 1 angeordnet ist. Die Auslaufleitung 77 aus dem Filter 76 versorgt die Sprühdüsen 54 mit Druckwasser. Das von den Sprühdüsen 54 abgegebene Wasser läuft in Inneren des wasserdichten Förderkanals 42 in dasjenige Wasser, welches in dem Förderkanal 42 vermöge seiner Kommunizierung mit den Wasserbehälter 1 über den Entnahmestutzen 40 bis zur Wasserspiegelhöhe im Wasserbehälter 1 steht. Die Sprühdüsen 54 sind mithin oberhalb des Wasserspiegels im Wasserbehälter angeordnet und der Förderkanal 42 erstreckt sich demzufolge bis über den genannten Wasserspiegel.

An der Seitenwand 5 des Wasserbehälters 1 ist in Höhe des Wasserspiegels eine Ölsammelrinne 58 vorgesehen, welche auf dem Wasserspiegel des Wassers im Wasserbehälter 1 aufschwimmendes Öl zu entnehmen gestattet. Eine entsprechende, nicht dargestellte Ölsammelrinne kann in Höhe des Wasserspiegels im Förderkanal 42 an diesem vorgesehen sein, um von den mit Druckwaser besprühten Metallteilen auf dem Kratzförderer 44 ablaufende Ölreste abnehmen zu können.

Um die Verweilzeit der von der Zentralwelle 16 erfaßten Metallteile zu erhöhen, kann die Zentralwelle 16 mit einer geringen, zum Entnahnestutzen 40 hin ansteigenden Neigung in den Wasserbehälter eingebaut sein. Alternativ kann durch entsprechende Fölgenverstellung der Füsse 6, 7, 8 der gesammte Wasserbehälter 1 zur Seite des Entnahmestutzens 40 erhöht werden. Es sammeln sich dann de in den Wasserbehälter 1 eingefüllten Metallteile an einem Abschnitt der Zentralwelle, der unterhalb der Einfüllrutsche 2 liegt, wobei dann der Entnahmestutzen 40 am gegenüberliegenden Ende der Zentralwelle 16 wie dargestellt angordnet ist. Als Alternative zu dem Kamm 23 empfiehlt es sich, auf die Innenwand des Zylindermantels 13 mehrere, in Umfangsrichtung beabstandete Schwellen aufzubringen, die sich axial erstrecken und gegen die die Metallteile vom den Mitnehnern 20, 21 angeschlagen werden können.

Die Vorrichtung arbeitet wie folgt: Ölfilter, Innenfilter, Filterpatronen und Stahlkanister kommen zerkleinert aus den Schreddern und werden mittels nicht dargestelltem Förderband zum Wasserbehälter 1 transportiert und fallen über die Rutsche 2 in freiem Fall in das Wasserbad. Leichte, ölgetränkte Papieranteile bleiben an der Oberfläche, Stahl, gegebenenfalls mit Papieranhaftungen sinkt auf den Behälterboden.

Die Zentralwelle 16 mit ihren Mitnehrern 20, 21 wird permanent in Umdrehung versetzt, wodurch die von ihren Mitnehmern erfaßten Stahlteile durcheinander gewirbelt werden. Die Rotation der Zentralwelle 16 im Sinne des Pfeiles 79 hat aber auch die Folge, daß das Wasser in dem Wasserbehälter in ständiger, kreisender Gegenbewegung oberhalb der Zentralwelle 16 gehalten wird, wie Pfeil 70 andeutet. Dadurch erfahren die im Wasserbad absinkenden Metallteile bereits vor dem Angriff der Mitnehmer der Zentralwelle 16 eine Verwirbelung, welche das Ablösen nur leicht anhaftender Papierteile von den Stahlteilen bewirkt oder wenigstens vorbereitet. Wie erwähnt befindet sich die untere Walze 28 der Abkämmvorrichtung 26 im Zentralbereich der gemäß Pfeil 70 kreisenden Umlaufbewegung des Wassers im Behälter 1.

Wenn die Stahl- und Papierteile von den Mitnehmern der Zentralwelle erfasst werden, werden diese an die Zylinderwand 13 gepresst beziehungsweise gegen die Zinken 24 des Kamms 23 oder die Schweller angeschlagen. Dadurch werden weitere Papierteile von ihrer Anhaftung an den Stahlteilen gelöst. Klebstoff sowie Gunniteile bleiben zunächst teilweise noch im Bereich der Zentralweile 16 mit den Stahlteilen eingefangen. Dagegen schwimmen die leichten und mit Öl getränkten Papieranteile im Wasser des Behälteres 1 auf und werden von der Abkämmvorrichtung 26 erfasst. Da frei im Wasser schwebendes Öl begünstigt am Filterpapier haften bleibt, das ölverschmutzte Filterpapier jedoch von der Abkämmvorrichtung 26 ständig aus dem Wasserbad abgezogen wird, bleibt das Wasser im Dauerbetrieb relativ frei von Öl.

Die sich in dem Wasserbad in Rotation befindlichen Stahlteile werden ständig von den Mitnehnern mitgerissen und aufgewirbelt.

Das über die Einfüllrutsche 2 kontinuierlich in den Behälter 1 eingetragene Material fließt längs der Zentralwelle 16 zur Austragöffnung 22 hin. Durch Verstellen der Höhe der Füße 6, 7, 8 kann der Neigungswinkel der Zentralwelle 16 eingestellt und variiert werden, so daß die Materialfließgeschwindigkeit entsprechend der durch die Vorrichtung durchzusetzenden Materialmenge eingestellt werden kann. Das in die Austragöffnung 22 gelangte Material fällt durch den Entnahmestutzen 40 auf den Kratzförderer 44, von dessen Stollen 43 es mitgenommen wird. Oberhalb des Wasserspiegels im Förderkanal 42 wird das geförderte Material durch die Sprühdüsen 54 von Ölanhaftungen befreit. Dabei löst sich der Ölfilm des Matrials. Das nunmehr ölfreie, aber nasse Material wird durch einen, nicht gesondert dargestellten Materialabweiser, der in Förderrichtung oberhalb der Sprühdüsen über dem oberen Trum des Förderbands 46 angeordnet ist, von dem Förderband in den Abwurfkanal 52 befördert.

Das Wasser im Wasserbehälter 1 ist frei von chemischen Zusätzen, um ungewünschte Emulsionen zu vermeiden. Die Arbeitstemperatur des Wassers entspricht etwa der Raum-Temperatur bei etwa 20° Celsius. Die Waschstation kann auch hinter dem Kratzförderer angeordnet sein.

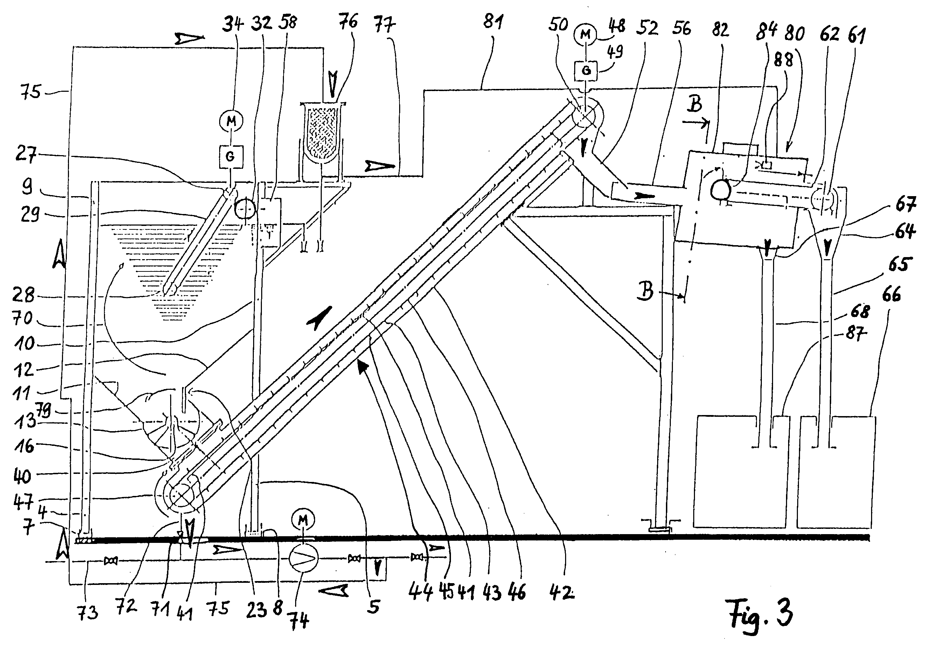

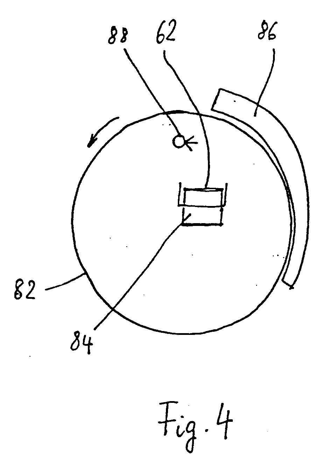

Die Waschstation 55 aus der vorstehend beschriebenen Ausführungsform der Erfindung kann gemäß der in den Fig. 3 und 4 dargestellten weiteren Ausführungsform in die Trennstation 80 integriert sein. In der Fig. 3 sind diejenigen Teile der weiteren Ausführungsform der Erfindung, die mit denen aus der ersten Ausführungsform übereinstimmen, mit gleichen Bezugszeichen versehen.

Die Schwingrinne 56 mündet im wesentlichen axial in eine Trenntrommel 82 zylindrischer Form, welche in nicht dargestellter Weise während des Betriebs der Vorrichtung zur Drehung um ihre Achse angetrieben ist. Im Inneren der Trenntrommel 82 ist der in Strömungsrichtung vordere Teil des Förderbands 62 gehalten, welches um die beiden Umlenkwalzen 61 und 84 umläuft. Eine der beiden Umlenkwalzen 61, 84 ist in nicht dargestellter Weise mit einem Antrieb gekoppelt, so daß im Betriebe das obere Trum des Förderbands 62 sich im wesentlichen parallel zu Achse der Trenntrommel 82 aus dieser heraus bewegt. Am hinteren unteren Ende ist der Mantel der Trenntrommel 82 mit mehreren über die Umfang verteilten Öffnungen versehen, welche über dem Einlauftrichter 67 des Fallschachtes 68 bei Drehung der Trenntrommel 82 hinweglaufen.

Wie insbesondere Fig. 4 zeigt, ist an demjenigen Teil ihres Mantels, der sich bei Drehung nach oben bewegt, ein bogenförmiger Dauer- oder Elektromagnet 86 nahe an der Außenseite des Trommelmantels angeordnet. Der Magnet 86 endet oben etwa oberhalb des Förderbandes 62. In Förderrichtung kurz hinter dem Magneten 86 sind in der Trenntrommel 82 mehrere Sprühdüsen befestigt, von denen eine in den Fig. 3 und 4 dargestellt und mit 88 bezeichnet ist. Die Öffnung der Sprühdüsen 88 ist gegen die Förderrichtung und gegen die Innenperipherie des bei Drehung aufwärts bewegten Trommelmantels gerichtet. Die Düsen 88 sind an eine Druckwasserleitung 81 angeschlossen, die von der Leitung 77 abzweigt.

Auf diese Weise gelangen die über die Schwingrinne 56 angeförderten Blechteile, welche nach mit anhängenden Papierteilen oder Ölresten behaftet sein können, in das Innere der Trommel und werden dort von der Trenmel in Drehrichtung mitgenommen. Zur Unterstützung der Mitnahme können aus der Innenperipherie des Trommelmantels nicht dargestellte Schweller oder Leisten nach innen vorstehen. Sobald die Matallteile in den Anziehungsbereich des Magneten 86 gelangen, werden sie an der Innenperipherie der Trommel 82 festgehalten und nach oben mitgenonmen. Dort gelangen sie in den Sprühstrahl der Düsen 88, wobei das versprühte Druck- oder Heißwasser die erwähnten Papierreste und Ölreste von den Metallteilen entfernen. Wenn die Metallteile das obere Ende des Magneten 86 erreicht haben, fallen sie nach unten auf das in ihrem Fallweg bereitstehende, über dem Wasserspiegel angeordntete Förderband 62, von welchem die gereinigten Metallteile aus der Trenntrommel 82 nach außen gefördert und über den Fallschacht 65 dem Behälter 66 zugeführt werden.

Das ölverschmutzte in dem Waschwasser aufschwimmende Papiergut gelangt durch die erwähnten Öffnungen der Trenntrommel 82 in den Fallschacht 68, welcher in diesem Ausführungsbeispiel der Erfindung in einen Behälter 83 eines Verdichters führt, welcher den Papierschlamm von anhaftendem Wasser befreit.

## Patentansprüche

1. Vorrichtung zum Trennen von insbesondere durch Öl verschmutzten, zerkleinerten Abfallteilen, welche Stahl- und/oder Blechteile sowie Papier enthalten, mit einem Wasserbehälter (1), in dessen unterem Teil eine antreibbare, mit Mitnehmern (20, 21) versehene Welle (16) als Umwälzvorrichtung angeordnet ist, wobei unterhalb der Umwälzvorrichtung an dem Boden des Wasserbehälters (1) eine einen Förderer (46) aufweisende Entnahmevorrichtung (42, 44) für die Blechteile oder dergleichen über einem Entnahmestutzen (40) befestigt ist, sowie mit einer Waschstation (55) für die entnommenen Blechteile oder dergleichen sowie mit einer Abkämmvorrichtung für in dem Wasserbehälter (1) aufschwimmendes Gut, dadurch gekennzeichnet, daß die Waschstation (55) mehrere beabstandete Sprühdüsen (54) für Kalt- oder Heißwasser aufweist, die an dem Förderer (46) oberhalb des Wasserstandes im Wasserbehälter (1) angeordnet sind.

2. Vorrichtung nach Anspruch 1, dadurch gekennzeichnet, daß an die Waschstation (55) eine Trennstation (60, 62) angeschlossen ist, welche eine Magnettrommel (60) aufweist.

3. Vorrichtung nach Anspruch 2, dadurch gekennzeichnet, daß die Trennstation eine Fördereinrichtung (Schwingrinne 56) aufweist, die in die Magnettrommel (60) führt, in deren Innerem ein höher angeordnetes Förderband (62) für die Metallteile sowie ein Wasserbad für ölige Papiere vorgesehen sind.

4. Vorrichtung zum Trennen von insbesondere durch Öl verschmutzten, zerkleinerten Abfallteilen, welche Stahl- und/oder Blechteile sowie Papier enthalten, mit einem Wasserbehälter (1), in dessen unterem Teil eine antreibbare, mit Mitnehmern (20, 21) versehene Welle (16) als Umwälzvorrichtung angeordnet ist, wobei unterhalb der Umwälzvorrichtung an dem Boden des Wasserbehälters (1) eine einen Förderer (46) aufweisende Entnahmevorrichtung (42, 44) für die Blechteile oder dergleichen über einen Entnahmestutzen (40) befestigt ist, sowie mit einer Waschstation (55) für die entnommenen Blechteile oder dergleichen sowie mit einer Abkämmvorrichtung für in dem Wasserbehälter (1) aufschwimmendes Gut, dadurch gekennzeichnet, daß die Waschstation in eine Trennstation (80) integriert ist, welche der Entnahmevorrichtung (42, 44) nachgeschaltet ist und einen Magneten (86) zur Entnahme von Blechteilen aus dem von der Entnahmevorrichtung (42, 44) ausgegebenen Gut aufweist.

5. Vorrichtung nach Anspruch 4, dadurch gekennzeichnet, daß die Trennstation (80) eine Trenntrommel (82) aufweist, in welche die aus der Entnahmevorrichtung abgegebenen Blechteile oder dergleichen gelangen und in welcher mehrere Sprühdüsen (88) angeordnet sind.

6. Vorrichtung nach einem der Ansprüche 4 oder 5, dadurch gekennzeichnet, daß der Magnet (86) an der Außenseite der Trenntrommel (82) angeordnet ist.

7. Vorrichtung nach einem der vorstehenden Ansprüche, dadurch gekennzeichnet, daß die Abkämmvorrichtung eine Förderschnecke (30) aufweist, die in einen zweckmäßig porösen Konus (36) zur Verdichtung des Filtrats arbeitet.

8. Vorrichtung nach Anspruch 7, dadurch gekennzeichnet, daß die Abkämmvorrichtung einen in das Wasser des Wasserbehälters (1) eintauchenden Rechen aufweist, welcher vorzugsweise aus mehreren, beiderseits in je einer Endloskette befestigten Rechenelementen (29) besteht.

## Claims

1. Apparatus for seperating disintegrated particularly oil spoiled parts of waste including steel parts and/or sheet metal parts and paper, the apparatus having a water container (1) in the lower part of which a shaft (16) adapted to be driven and provided with catches (20, 21) as circulating device is arranged, wherein a withdrawing device (42, 44) for the sheet metal or similar parts including a conveyor (46) is mounted through a withdrawal piece (40) to the bottom of the water container (1) below the circulating device, the apparatus further having a wash station (55) for the withdrawn sheet metal or similar parts and having a combing away device for material floating within the water container (1), characterized in that the wash station (55) includes a plurality of spaced spraying nozzles (54) for cold water or hot water which are arranged at the conveyor (46) above the water level within the water container (1).

2. Apparatus according to claim 1 characterized in that a separating station (60, 62) is coupled to the wash station (55) which includes a magnet drum (60).

3. Apparatus according to claim 2 characterized in that the separating station includes a conveyor means (vibrating conveyor 56) leading to the magnet drum (60) in the interior of which a conveyor belt (62) arranged at a higher level for the metal parts and a water bath for oily papers are provided.

4. Apparatus for separating disintegrated particularly oil spoiled parts of waste including steel parts and/or sheet metal parts and paper, the apparatus having a water container (1) in the lower part of which a shaft (16) adapted to be driven and provided with catches (20, 21) as circulating device is arranged, wherein a withdrawing device (42, 44) for the sheet metal or similar parts including a conveyor (46) is mounted through a withdrawal piece (40) to the bottom of the water container (1) below the circulating device, the apparatus further having a wash station (55) for the withdrawn sheet metal or similar parts and having a combing away device for material floating within the water container (1), characterized in that the wash station is integrated into a separating station (80) coupled downstream to the withdrawing device (42, 44) and having a magnet (86) for withdrawing of sheet metal parts from the material supplied from the withdrawing device (42, 44).

5. Apparatus according to claim 4 characterized in that the separating station (80) includes a separating drum (82) into which the sheet metal or similar parts supplied by the withdrawing device are fed and within which a plurality of spraying nozzles (88) are arranged.

6. Apparatus according to anyone of claims 4 or 5 characterized in that the magnet (86) is disposed at the outside of the separating drum (82).

7. Apparatus according to anyone of the preceding claims characterized in that the combing away device includes a conveyor worm (30) which feeds into a preferably porous cone (36) for compressing the filtrate.

8. Apparatus according to claim 7 characterized in that the combing away device includes a rake dipping into the water of the water container (1) and comprising preferably a plurality of rake elements (29) each mounted on either sides to an endless chain.

## Revendications

1. Dispositif pour séparer en particulier des déchets réduits en petits morceaux, souillés d'huile, contenant des particules d'acier et /ou de tôle et du papier, avec un réservoir d'eau (1), dans la partie intérieure duquel un arbre (16) actionnable, muni d'entraîneurs (20, 21) est placé comme dispositif circulateur, un dispositif de prélèvement (42, 44) pour les particules en tôle ou semblables, présentant un transporteur (46), étant fixé au fond du réservoir d'eau (1) au-dessous du dispositif circulateur par l'intermédiaire d'une buse de prélèvement (40), de même qu'avec un poste de lavage (55) pour les particules de tôle prélevées ou semblables, de même qu'avec un dispositif de ratissage pour le matériau qui surnage dans le réservoir d'eau (1), caractérisé en ce que le poste de lavage (55) présente plusieurs pulvérisateurs (54) espacés les uns des autres pour l'eau froide ou l'eau chaude qui sont disposés sur le transporteur (46) au-dessus du niveau de l'eau dans le réservoir d'eau (1).

2. Dispositif selon la revendication 1, caractérisé en ce qu'un poste séparateur (60, 62) est raccordé au poste de lavage (55) et qu'il présente un tambour magnétique (60).

3. Dispositif selon la revendication 2, caractérisé en ce que le poste séparateur présente une installation de transport (couloir vibrant 56) qui mène au tambour magnétique (60) à l'intérieur duquel sont prévus un convoyeur à bande (62) placé plus haut pour les particules en métal de même qu'un bain-marie pour les papiers huileux.

4. Dispositif pour séparer en particulier des déchets réduits en petits morceaux, souillés d'huile, contenant des particules d'acier et /ou de tôle et du papier, avec un réservoir d'eau (1), dans la partie inférieure duquel un arbre (16) actionnable, muni d'entraîneurs (20, 21) est placé comme dispositif circulateur, un dispositif de prélèvement (42, 44) pour les particules en tôle ou semblables, présentant un transporteur (46), étant fixé au fond du réservoir d'eau (1) au-dessous du dispositif circulateur par l'intermédiaire d'une buse de prélèvement (40), de même qu'avec un poste de lavage (55) pour les particules de tôle prélevées ou semblables, de même qu'avec un dispositif de ratissage pour le matériau qui surnage dans le réservoir d'eau (1), caractérisé en ce que le poste de lavage est intégré dans un poste séparateur (80) qui est intercalé à la suite du dispositif de prélèvement (42, 44) et présente un aimant (86) pour prélever les particules en tôle du matériau délivré par le dispositif de prélèvement (42, 44).

5. Dispositif selon la revendication 4, caractérisé en ce que le poste séparateur (80) présente un tambour séparateur (82) dans lequel arrivent les particules de tôle ou semblables délivrées par le dispositif de prélèvement et ou sont disposés de nombreux pulvérisateurs (88).

6. Dispositif selon l'une des revendications 4 ou 5, caractérisé en ce que l'aimant (86) est placé sur la côté extérieur du tambour séparateur (82).

7. Dispositif selon l'une des revendications précédentes, caractérisé en ce que le dispositif de ratissage présente une hélice transporteuse (30) qui contribue au compactage du produit filtré dans un cône (36) poreux conformément au but.

8. Dispositif selon la revendication 7, caractérisé en ce que le dispositif de ratissage présente un râteau plongeant dans l'eau du réservoir (1) qui consiste de préférence en plusieurs éléments de ratissage (29) fixés de chaque côté, respectivement en une chaîne sans fin.
